# EUROPEAN PATENT APPLICATION

(11) **EP 2 109 067 A1**
(43) Date of publication of application: **14.10.2009**
(21) Application number: 08290353.5
(22) Date of filing: 10.04.2008
(51) Int. Cl.: G06K 19/07

(54) **Multi-tag RFID chip to deliver adapted data of a bearer**

(71) Applicant: Alcatel Lucent, 75008 Paris (FR)
(72) Inventor: Leclerc, Denis, 91430 Igny (FR); Robinson, Julien, 92350 Le Plessis-Robinson (FR); Bataille, Fabien, 94260 Fresnes (FR); Beauvais, Mathieu, 91940 Les Ulis (FR); Boussard, Mathieu, 77930 Chailly en Biere (FR); Hebbar, Abdelkrim, 91400 Orsay (FR); Kolski, Audrey, 91220 Bretigny sur Orge (FR)
(74) Representative: Sayettat, Julien Christian

(57) **Abstract**

The invention concerns a multi-tag RFID chip (10) comprising a repository module (3) to store several RFID tags (4) each comprising an identifier (4a) and associated data (4b) of a bearer (1) of said chip, a communication module (5) able to communicate the data (4b) of one RFID tag (4) to a RFID reader (2), and a tag manager module (6) comprising a rule based engine module (7) to calculate which tag (4) will be fed to the communication module (5). The invention concerns also a method to deliver adapted data of a bearer (1) according to at least one parameter by using a multi-tag RFID chip (10).

## Description

The invention relates to a multi-tag RFID chip to deliver adapted data of a bearer according to at least one parameter, and a method to deliver adapted data of a bearer according to at least one parameter by using such chip.

Radio-frequency identification (RFID) is an automatic identification method, relying on storing and remotely retrieving data using devices called RFID tags.

Those devices are chips which comprise a tag, such tag bearing predetermined data associated with an identifier, such information being intended to be sent to a RFID reader by means of a radio signal.

The use of RFID tagging systems is already broadly used for objects and merchandise. It is starting to be used for humans, notably through implants for health care situations, and such use is growing.

Such RFID tags have several limits:
- the data associated with a RFID tag is static after being written by the RFID controller,
- there is usually only one tag per RFID chip, and only one set of data associated with the tag,
- the data associated to the tag cannot be changed by the bearer of the RFID chip,
- the bearer of a RFID chip is not in control of the data exchanged between the RFID tag and a RFID reader.

Therefore, as the contents of RFID chips are static and comprise a single tag, their capabilities are limited and do not permit interactions with their bearer.

The purpose of the invention is to resolve the problems of the prior art by proposing, in particular, a multi-tag RFID chip and a method to deliver adapted data of a bearer according to at least one parameter.

For that purpose and according to a first aspect, the invention proposes a multi-tag RFID chip comprising a repository module to store several RFID tags each comprising an identifier and associated data of a bearer of said chip, a communication module able to communicate the data of one RFID tag to a RFID reader, and a tag manager module comprising a rule based engine module to calculate which tag will be fed to the communication module.

According to a second aspect, the invention relates to a method to deliver adapted data of a bearer according to at least one parameter by using a multi-tag RFID chip comprising a repository module to store several RFID tags each comprising an identifier and associated data of the bearer, said method comprising the configuration of said multi-tag RFID chip in order to define rules between the RFID tags and the at least one parameter, wherein, upon a delivering request, the at least one parameter is determined and said rules are used to transmit the data stored in the adapted RFID tags according to the determined parameters.

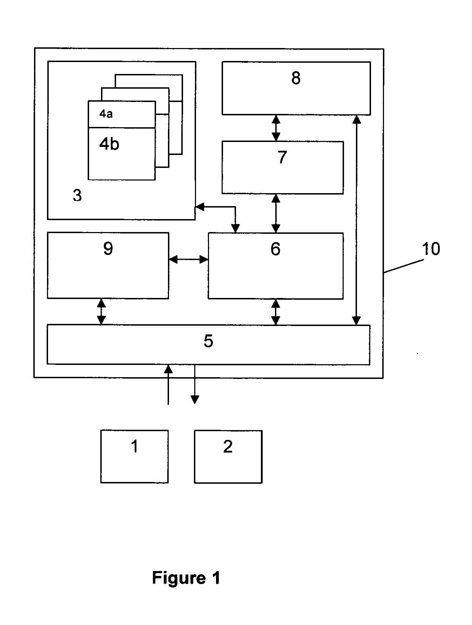

Other aspects and advantages of the invention will become apparent in the following description made with reference to the appended figure that represents schematically the multi-tag RFID chip architecture, wherein the possible interactions with the modules of said chip are represented by arrows.

In relation with the figure, a description is made of a multi-tag RFID chip 10 able to deliver adapted data of a bearer according to at least one parameter.

The multi-tag RFID chip 10 owned by a bearer 1 comprises information to be delivered to a RFID reader 2, said chip comprising at least one identification of the bearer 1.

In order to enable the bearer 1 to choose the adapted information that will be delivered from the multi-tag RFID chip 10 to the RFID reader 2, said multi-tag RFID chip 10 comprises a repository module 3 to store several RFID tags 4 each comprising an identifier 4a and associated data 4b of a bearer 1 of said chip.

Each tag 4 has a unique identifier 4a and a data set 4b, said data set comprising notably identity description of the bearer 1 and other possible data. The identity 4a of the bearer 1 can change from one tag 4 to another.

The multi-tag RFID chip 10 also comprises a communication module 5 able to communicate the data of one RFID tag 4 to a RFID reader 2. A RFID reader 2 is an external device able to send a delivering request to the multi-tag RFID chip 10 in order to receive a data set 4b.

The communication module will process any request from a RFID reader 2 and will dispatch the internal messages to the different internal modules of the RFID chip.

The multi-tag RFID chip 10 further includes a tag manager module 6 comprising a rule based engine module 7 to calculate which tag 4 will be fed to the communication module 5.

Additionally, the multi-tag RFID chip 10 comprises a context listener module 8 to feed the rule based engine module 7 with contextual parameters.

Contextual parameters are data such as calendar, time, and geographical localisation. The context listener module 8 comprises the necessary devices in order to obtain those contextual parameters sent by external devices such as a global positioning system (GPS).

The multi-tag RFID chip 10 also comprises a tag administrator module 9 including means to identify the bearer 1 and means to allow configuration of the rule based engine module 7 by the bearer 1.

By means of the above modules, the bearer 1 can use the multi-tag RFID chip 10 to deliver adapted data according to his configuration of said chip.

In one embodiment, the bearer 1 configures the multi-tag RFID chip 10, before using said chip. To do so, the bearer 1 uses a radio capable terminal, such as a Smartphone, a Personal Digital Assistant (PDA) or another dedicated terminal.

The terminal can include a graphical user interface and means to communicate the configuration request of the bearer 1. The communication between the radio capable terminal and the multi-tag RFID chip 10 is established through a secure data channel.

With the configuration requests, the bearer can modify can modify the data 4b associated to the different tags 4 of the multi-tag RFID chip 10 in order to personalize said chip.

In addition, the configuration requests correspond to the definition of the rules that will be applied to determine which tag 4 will be fed to the communication module 5, and thus which data set 4b will be communicated to the RFID reader 2.

Such rules are defined and/or updated by the bearer through communication between the terminal and the communication module 5 of the multi-tag RFID chip, by using the graphical user interface of said terminal.

The rules are defined according to the preferences of the bearer 1, the available context of the bearer 1 and/or a predefined scenario chosen by the bearer 1.

For example, the bearer 1 can send a configuration request for the multi-tag RFID chip 10 to only deliver data concerning one of his identities when he is in a given geographical localisation (when in a given club, he is only identified as one of his avatars).

The configuration request of the bearer is sent, via the communication module 5, to the tag administrator module 9.

In another embodiment, the rule based engine module 7 can be configured prior to its use by the bearer 1, said bearer being able to update such predetermined rules by means of his radio capable terminal.

The tag administrator module 9 comprises means to identify the bearer 1 and means to allow the requested configuration of the rule based engine module 7 by the bearer 1.

Thus, the tag administrator module 9 first identifies the person who communicated a configuration request. If the result of the identification enables to identify the proper bearer 1, the tag administrator module 9 sends the configuration request to the rule based engine module 7.

The rule based engine module 7 can be included in the tag manager module 6, said tag manager module being intended to collect data and send it to said rule based engine module.

The data collected by the tag manager module 6 is:
- the configuration request of the bearer 1 sent by the tag administrator module 9,
- at least one contextual parameter sent by the context listener module 8.

The context listener module 8 feeds the rule based engine module 7 in real time with the contextual parameters, such as the current time or place where the bearer is. Thus, the contextual parameters can be used by the rules in order to communicate the data set 4b according to the context of the communication between the multi-tag RFID chip and the RFID reader 2.

For example, the bearer 1 can pre-configured the multi-tag RFID chip 10 so that he is identified as one of his avatars when he is in a given club. If the contextual parameter received by the rule based engine module 7 indicates that the bearer 1 is in that club, that rule will use such current contextual parameter to calculate which tag 4 will be fed to the communication module 5.

Thus, upon a delivering request, i.e. when the multi-tag RFID chip 10 is within signal range of a RFID reader 2, the contextual parameter is determined and the rules are used to transmit the data 4b stored in the adapted RFID tags 4 according to the determined parameters.

## Claims

1. Multi-tag RFID chip (10) comprising a repository module (3) to store several RFID tags (4) each comprising an identifier (4a) and associated data (4b) of a bearer (1) of said chip, a communication module (5) able to communicate the data (4b) of one RFID tag (4) to a RFID reader (2), and a tag manager module (6) comprising a rule based engine module (7) to calculate which tag (4) will be fed to the communication module (5).

2. Multi-tag RFID chip (10) according to claim 1, wherein at least some of the rules of the rule based engine module (7) use contextual parameters, said multi-tag RFID chip (10) further comprising a context listener module (8) to feed the rule based engine module (7) with such contextual parameters.

3. Multi-tag RFID chip (10) according to claim 1 or 2, further comprising a tag administrator module (9) including means to identify the bearer (1) and means to allow configuration of the rule based engine module (7) by the bearer (1).

4. Method to deliver adapted data (4b) of a bearer (1) according to at least one parameter by using a multi-tag RFID chip (10) comprising a repository module (3) to store several RFID tags (4) each comprising an identifier (4a) and associated data (4b) of the bearer (1), said method comprising the configuration of said multi-tag RFID chip (10) in order to define rules between the RFID tags (4) and the at least one parameter, wherein, upon a delivering request, the at least one parameter is determined and said rules are used to transmit the data (4b) stored in the adapted RFID tags (4) according to the determined parameters.

5. Method according to claim 4, wherein the rules are defined according to the preferences of the bearer (1), the available context of the bearer (1) and/or a predefined scenario chosen by the bearer (1).

6. Method according to claim 4 or 5, wherein the parameters used by the rules are contextual parameters.

7. Method according to any of claims 4 to 6, wherein the adapted data (4b) are delivered through a communication between a RFID reader (2) and a communication module (5) of the chip which is able to communicate the data (4b) of one RFID tag (4) to the RFID reader (2).

8. Method according to claim 7, wherein rules are defined and/or updated by the bearer (1) through communication between a terminal and the communication module (5) of the multi-tag RFID chip (10).

9. Method according to claim 8, wherein associated data (4b) are defined and/or updated by the bearer (1) through the communication between the terminal and the communication module (5) of the multi-tag RFID chip (10).

10. Method according to claim 8 or 9, wherein the communication is established through a secure data channel with a radio capable terminal.
